# EUROPÄISCHE PATENTSCHRIFT

(11) **EP 3 153 476 B1**
(45) Veröffentlichungstag und Bekanntmachung des Hinweises auf die Patenterteilung: **27.12.2023**
(21) Anmeldenummer: 16192181.2
(22) Anmeldetag: 04.10.2016
(51) Int. Cl.: C02F 1/42, B01J 49/00

(54) **VERWENDUNG EINER SALZSOLE ZUR KONSERVIERUNG EINES IONENAUSTAUSCHERHARZES**
USE OF A SALT BRINE FOR PRESERVING AN ION EXCHANGE RESIN
UTILISATION D'UNE SAUMURE POUR LA CONSERVATION D'UNE RÉSINE ÉCHANGEUSE D'IONS

(30) Priorität: 09.10.2015 DE 102015219619
(43) Veröffentlichungstag der Anmeldung: 12.04.2017
(73) Patentinhaber: Judo Wasseraufbereitung GmbH, 71364 Winnenden (DE)
(72) Erfinder: Pantow, Christian, 71364 Winnenden (DE); Schwärzler, Alexander, 71364 Winnenden (DE); van de Weyer, Martin, 73061 Ebersbach (DE); Neidhardt, Klaus, 71577 Großerlach (DE)
(74) Vertreter: Kohler Schmid Möbus Patentanwälte

(56) Entgegenhaltungen:
- EP-A1- 0 439 253
- DE-A1- 4 312 600
- DE-A1-102010 028 756
- W. S. Miller ET AL: "Understanding Ion-Exchange Resins For Water Treatment Systems", , 1. Juni 2009 (2009-06-01), XP055318709, Gefunden im Internet: URL:http://chinaionexchange.com/pic/other/ 2013-09-25-23-30-385.pdf [gefunden am 2016-11-11]
- Dow: "DOW Ion Exchange Resins - Proper Storage Conditions for Used Resin Beds", , 30. September 2015 (2015-09-30), XP055318745, Gefunden im Internet: URL:http://dowac.custhelp.com/app/answers/ detail/a_id/1827/related/1/session/L2F2LzE vdGltZS8xNDc4ODYwNzI1L3NpZC9ubWlLd24zbg== [gefunden am 2016-11-11] & Dow: "DOW Ion Exchange Resins - Storage Conditions for Used Product", , 19. März 2014 (2014-03-19), XP055318748, Gefunden im Internet: URL:http://dowac.custhelp.com/app/answers/ detail/a_id/162/~/dow-ion-exchange-resins- --storage-conditions-for-used-product [gefunden am 2016-11-11]
- Peter Meyers: "Protect the resin", , 13. Oktober 2010 (2010-10-13), XP055318730, Gefunden im Internet: URL:http://www.watertechonline.com/protect -the-resin/ [gefunden am 2016-11-11]
- James Mcdonald: "Softeners: Why is the Brine Diluted?", , 1 January 2006 (2006-01-01), XP055437613, Retrieved from the Internet: URL:http://www.veoliawatertech.com/crownso lutions/ressources/documents/2/21875,Water -pp33-34.pdf [retrieved on 2017-12-22]
- Purolite: "The Storage, Transportation and Preconditioning of Ion Exchange Resins Storage Transportation & Preconditioning", Purolite Product Bulletin, 9 December 2012 (2012-12-09), XP055826566, Retrieved from the Internet: URL:www.purolite.com [retrieved on 2021-07-21]

## Beschreibung

Die Erfindung betrifft eine Verwendung einer Salzsole in einem Harzbehälter für eine Wasserenthärtungsanlage, wobei der Harzbehälter ein Ionenaustauscherharz enthält, mit den Schritten
a) Befüllen des Harzbehälters mit der Salzsole,
b) Ausspülen der Salzsole aus dem Harzbehälter,

wobei die Salzsole zum Konservieren des Ionenaustauscherharzes zwischen den Schritten a) und b) verwendet wird,
und wobei zwischen den Schritten a) und b) der Harzbehälter für eine Konservierzeit von wenigstens 8 Stunden mit der Salzsole gefüllt bleibt.

Eine solche Verwendung ist aus der DE 43 12 600 A1 bekannt geworden.

Wasserenthärtungsanlagen werden in verschiedenen Anwendungsbereichen eingesetzt, wenn enthärtetes oder teilenthärtetes Wasser aus technischen Gründen oder aus Komfortgründen benötigt wird. Bei der Enthärtung nach dem lonenaustauschverfahren werden die im Wasser enthaltenen Härtebildner Calcium- und Magnesium-Ionen gegen Natrium-Ionen ausgetauscht. Dies geschieht mittels eines mit Natrium-Ionen beladenen Ionenaustauscherharzes. Die üblicherweise eingesetzten Ionenaustauscherharze sind organische Polymere mit funktionellen Gruppen. Häufig bilden Polystyrol-Divinylbenzol-Copolymere die Matrix des Ionenaustauscherharzes. Bei Erschöpfung muss das Ionenaustauscherharz mit Salzsole regeneriert werden, um es erneut für die Enthärtung verwenden zu können.

Da bei Trinkwasser generell keine vollständige Keimfreiheit garantiert werden kann, müssen Wasserenthärtungsanlagen derart betrieben werden, dass eine Aufkeimung in der Anlage vermieden wird. Hierzu wird bei DIN/DVGW geprüften Anlagen das Ionenaustauscherharz bei jeder Regeneration desinfiziert. Außerdem wird spätestens nach 4 Tagen automatisch eine Regeneration ausgelöst.

Die DE 10 2005 049 169 A1 offenbart ein Verfahren, bei dem in der Regeneriermittellösung Chlordioxid in situ erzeugt und durch den Ionenaustauscher hindurchgeleitet wird. Das Chlordioxid kann aus der Regeneriermittellösung nach Zusatz einer Chloritkomponente elektrolytisch erzeugt werden.

Die DE 299 20 696 U1 beschreibt eine Vorrichtung, bei der Chlor in der Salzsole zur Regeneration elektrolytisch erzeugt wird.

Aus der EP 0 032 994 B1 ist ein Verfahren zur Desinfektion einer Natriumchlorid-Salzlösung bekannt, bei dem in aufzulösenden Natriumchlorid-Tabletten Dichloroisocyanurat als Chlorquelle beigemengt ist. Eine bakterielle Verunreinigung der Natriumchlorid-Salzlösung vor Beginn einer Regeneration des Ionenaustauscherharzes wird dadurch vermieden, so dass auch eine bakterielle Verunreinigung des Ionenaustauscherharzes bei der Regeneration vermieden wird.

Nachteilig ist bei den genannten Vorrichtungen und Verfahren, dass die chemischen Desinfektionsmittel durch Zehrung und Flüchtigkeit nur kurzzeitig wirken. Darüber hinaus greifen starke Oxidationsmittel auf Chlorbasis die Ionenaustauscherharze und andere Materialien wie Dichtungen an und können diese beschädigen.

Aus der DE 43 12 580 C1 und der EP 0 970 919 B1 ist es bekannt, die Regenerierlösung aufzuheizen und das Ionenaustauschermaterial thermisch zu desinfizieren. Nachteilig ist dabei, dass eine Heizeinrichtung benötigt wird, wodurch der Energieverbrauch ansteigt. Weiterhin müssen temperaturbeständige Materialien verwendet werden.

Die EP 0 439 253 A1 beschreibt ein Verfahren, bei dem eine Wasserenthärtungsanlage vor der Entnahme von enthärtetem Wasser durchgespült wird, um Verunreinigungen auszuwaschen. Diese Anordnung ist zwar einfach im Aufbau, jedoch kann eine stärkere Aufkeimung, etwa während langen Stagnationsphasen, durch alleiniges Spülen nicht zuverlässig beseitigt werden.

W.S. Miller et. al. "Understanding Ion-Exchange Resins For Water Treatment Systems", Juni 2009, schlägt vor, bei einer lonentauscher-Ausrüstung im Falle eines Stillstands von mehr als einer Woche die verbliebene Enthärtungskapazität der Enthärtungseinheit noch zu verbrauchen, und dann die Enthärtungseinheit zu leeren. Bei Frostgefahr sollte eine Befüllung mit Salzsole stattfinden.

The Dow Chemical Company, "DOW Ion Exchange Resins - Proper Storage Conditions for Used Resin Beds", 30.9.2015, schlägt für benutzte Harzbehälter vor, inaktive Systeme in einer konzentrierten NaCl-Lösung zu lagern, um Biofouling zu minimieren.

Peter Meyers "Protect the resin", 13.10.2010, beschäftigt sich mit dem Überwintern von lonentauschersystemen. Es wird vorgeschlagen, ein Harzbett in der Salzsole zu belassen, mit der das Harz regeneriert wird. Um das lonentauschersystem wieder in Benutzung zu nehmen, braucht es nur gespült zu werden.

Die DE 10 2010 028 756 A1 beschreibt ein Verfahren zur Regeneration einer Wasserenthärtungsanlage, wobei konzentrierte Salzsole mit einer Pumpe in einen Strom von Verdünnungswasser zudosiert wird; die so erhaltene verdünnte Salzsole wird der Enthärtungsvorrichtung zugeführt. Das Mischungsverhältnis der verdünnten Salzsole kann an die jeweilige Betriebssituation angepasst werden. Eine Steuereinheit steuert eine Pumpe, ein Regelorgan und Ventile an.

Die DE 43 12 600 A1 beschreibt eine Kleinentsalzungsanlage mit elektrolytischer Herstellung von Regeneriermittel. Es werden weiterhin Patronenfilter für Labors oder Gläserspülmaschinen erwähnt, bei denen eine zentrale Regeneration der in den Patronen enthaltenen lonentauschermittel vorgesehen ist. Die Patronen müssen gelagert, verpackt, verschickt und transportiert werden. Bei Frostgefahr muss dem erschöpften lonentauschermaterial Kochsalz als Frostschutzmittel beigefügt werden.

Purolite Storage Bulletin "The Storage, Transportation and Preconditioning of Ion Exchange Resis", 2012, beschreibt Anforderungen für die Lagerung und den Transport von Ionentauschern. Es wird darauf hingewiesen, dass die Ionentauscher eine primäre Verpackung aufweisen, die nicht beschädigt werden sollte. Bezüglich der Lagerung der Ionentauscher wird darauf hingewiesen, dass diese in Gebäuden gelagert werden sollten, um die Temperatur unter 40°C zu halten. Weiterhin wird empfohlen, die Temperatur bei der Lagerung über 0°C zu halten. Falls voraussehbar ist, dass eine Handhabung bei Temperaturen unter 0°C erforderlich sein wird, kann das Harz mit einer gesättigten Salzsole konditioniert werden.

### Aufgabe der Erfindung

Es ist die Aufgabe der vorliegenden Erfindung, das Ionenaustauscherharz in einem Harzbehälter für eine Wasserenthärtungsanlage im Rahmen der Herstellung mit einfachen Mitteln zuverlässig und kostengünstig vor einer Verkeimung zu schützen.

### Kurze Beschreibung der Erfindung

Diese Aufgabe wird erfindungsgemäß gelöst durch eine Verwendung der eingangs genannten Art, die dadurch gekennzeichnet ist,
dass vor und/oder während Schritt a) ein Desinfektionsmittel in den Harzbehälter eingeleitet wird,
dass der Harzbehälter zwischen der Durchführung von Schritt a) und Schritt b) nach Abschluss seiner Montage in einem Herstellerwerk, wobei das lonentauscherharz im Harzbehälter angeordnet wird, und vor dem Einbau in eine Hausinstallation für wenigstens 24 Stunden eingelagert wird,
dass bei der Montage der Harzbehälter in die Wasserenthärtungsanlage eingebaut wird, wobei die Wasserenthärtungsanlage auch ein Vorratsgefäß für konzentrierte Salzlösung und eine elektronische Steuereinrichtung umfasst,
und dass beim Einbau die Wasserenthärtungsanlage in die Hausinstallation eingebaut wird.

Durch das Konservieren des Ionenaustauscherharzes mit der Salzsole kann eine Degradation des Ionenaustauscherharzes während der Konservierzeit verringert oder vermieden werden. Die zu vermeidende Degradation kann dabei einerseits durch mikrobiologische Verunreinigungen erfolgen und andererseits durch eine mechanische Schädigung des Ionenaustauscherharzes. Der Schutz vor mikrobiologischen Verunreinigungen beruht auf einer keimhemmenden Wirkung der Salzsole. Der Schutz vor mechanischer Beschädigung beruht auf einer Absenkung des Gefrierpunkts, so dass ein Einfrieren vermieden wird.

Die Salzsole enthält NaCl in wässriger Lösung. Salzsole hat (im Vergleich zu normalem, nur geringfügig salzhaltigem Trinkwasser) die Wirkung, das Wachstum von Keimen abzuschwächen. Bei hohen Solekonzentrationen ist eine keimreduzierende Wirkung festzustellen. Während eines Zeitraums zwischen den Schritten a) und b), in dem der Harzbehälter erfindungsgemäß mit der Salzsole befüllt bleibt, kann somit ein Aufkeimen (Wachstum/Vermehrung von Keimen) des Ionenaustauscherharzes zumindest verringert oder eine bestehende Verkeimung reduziert werden. Durch die erfindungsgemäße Verwendung der Salzsole kann somit vermieden werden, dass Keime (z.B. Bakterien) sich in dem Harzbehälter vermehren und ansiedeln. Es wird mithin eine konservierende Wirkung erzielt.

Auch Trinkwasser aus einem öffentlichen Trinkwassernetz ist nicht vollständig keimfrei, so dass eine gewisse Anzahl von Keimen unvermeidlich durch das zu enthärtende Wasser in den Harzbehälter eingeschleppt wird. Selbst eine gründliche Desinfektion, z.B. nach der Erstmontage des Harzbehälters oder während des Betriebs einer Wasserenthärtungsanlage mit dem Harzbehälter, führt in der Regel nicht zu einer andauernden Keimfreiheit bei längerer Stagnation. Im Laufe der Zeit kann im Ionenaustauscherharz eine Aufkeimungstendenz beobachtet werden. Es sind daher Gegenmaßnahmen zu treffen, durch die Keime abgetötet oder zumindest in ihrem Wachstum (Vermehrung) gehemmt werden. Nach DIN 19636-100 muss bei Wasserenthärtungsanlagen zur Keimreduzierung das Ionenaustauscherharz bei jeder Regeneration desinfiziert werden. Zudem muss spätestens alle 4 Tage eine Regeneration mit Desinfektion durchgeführt werden. Dadurch kann jedoch nicht sicher ausgeschlossen werden, dass sich die Keime in längeren Stagnationsphasen zwischen zwei Regenerationsvorgängen bei ungünstig warmen Temperaturverhältnissen vermehren. Im Rahmen der Erfindung kann ein Verkeimen des Ionenaustauscherharzes dadurch verhindert werden, dass das Ionenaustauscherharz während längeren Zeiten, in denen kein enthärtetes Wasser bereitgestellt werden muss, der Salzsole ausgesetzt wird bzw. bleibt. Vorzugsweise wird die Salzsole möglichst lange in dem Harzbehälter belassen, d.h. bis kurz vor den Zeitpunkt einer (nächsten) Entnahme von enthärtetem Wasser aus dem Harzbehälter.

Erfindungsgemäß ist vorgesehen, dass vor und/oder während Schritt a) ein Desinfektionsmittel in den Harzbehälter eingeleitet wird, insbesondere wobei das Desinfektionsmittel elektrolytisch in der Salzsole erzeugt wird oder der Salzsole zugegeben wird. Das Desinfektionsmittel tötet Keime schnell ab, während die Konservierung mit der Salzsole eine Wiederaufkeimung verhindert. Insbesondere kann durch die Salzsole eine Aufkeimung verringert oder verhindert werden, auch nachdem das Desinfektionsmittel aufgebraucht ist, sich verflüchtigt hat, oder in sonstiger Weise unwirksam geworden ist. Regelmäßige Desinfektionsintervalle können dann entsprechend verlängert werden. Das Desinfektionsmittel kann auch elektrolytisch in einer konzentrierten Salzlösung erzeugt werden, aus der die Salzsole durch Verschneiden mit Rohwasser gemischt wird.

Die Erfindung macht sich zu Nutze, dass zur Regeneration des Ionenaustauscherharzes einer Wasserenthärtungsanlage ohnehin Salzsole bereitgestellt werden muss. Ein apparativer Zusatzaufwand kann daher weitgehend vermieden werden; es sind lediglich Anpassungen einzelner an der Wasserenthärtungsanlage bereits vorhandener Komponenten erforderlich. Auch sind die Bauteile der Wasserenthärtungsanlage, insbesondere der Harzbehälter mit dem Ionenaustauscherharz, ohnehin beständig gegenüber Salzsole; der Einsatz spezieller Materialien, die auch gegen aggressive Desinfektionsmittel beständig sind, ist somit nicht erforderlich. Wenn der Harzbehälter nicht in eine Wasserenthärtungsanlage eingebaut ist, kann die Befüllung mit der Salzsole durch geeignete Apparate oder manuell erfolgen. Der Harzbehälter wird dann typischerweise nach der Befüllung mit der Salzsole wasserdicht verschlossen.

Durch die Verwendung von Salzsole zur Konservierung wird während der Konservierzeit, in der der Harzbehälter mit der Salzsole gefüllt ist, automatisch auch eine Regeneration des Ionenaustauscherharzes bewirkt. Nach einer Wiederinbetriebnahme der Wasserenthärtungsanlage zum Ende der Konservierzeit steht somit stets die volle Kapazität des Ionenaustauscherharzes zur Verfügung.

Ein Schutz des Ionenaustauscherharzes im Harzbehälter ist insbesondere dann sinnvoll, wenn längere Zeit kein enthärtetes Wasser aus dem Harzbehälter entnommen wird. Vorhandene Keime können sich in solchen Stagnationsphasen bei normaler Beschickung mit Wasser ungehindert vermehren. Eine Anzahl von Keimen in dem Harzbehälter kann dabei mit der Zeit exponentiell ansteigen. In Stagnationszeiten ab 8 Stunden kann es bereits zu einer ersten Verkeimung im Ionenaustauscherharz kommen, insbesondere bei höheren Temperaturen. Wenn während solcher Stagnationszeiten eine Konservierung gemäß der Erfindung stattfindet, kann das Keimwachstum im Vergleich zu einem nicht mit Salzsole konservierten Ionenaustauscherharz wirkungsvoll verringert oder sogar vollständig gestoppt werden. Die Durchführung eines herkömmlichen Regenerationszyklus des Ionenaustauscherharzes mit Salzsole dauert demgegenüber typischerweise 15 bis 30 Minuten, in Sonderfällen auch bis zu 2 Stunden, und nach Abschluss des herkömmlichen Regenerationszyklus kann es bei längerer Stagnation zu einer (erneuten) Aufkeimung kommen.

Vor der Wiederinbetriebnahme zur Wasserenthärtung wird in Schritt b) die Salzsole aus dem Harzbehälter ausgespült. Die Salzsole wird dazu vorzugsweise durch Einleiten von Rohwasser aus dem Harzbehälter verdrängt. Alternativ kann die Salzsole abgelassen oder abgepumpt werden, und der Harzbehälter kann anschließend mit Rohwasser befüllt werden. Bei Bedarf kann auch ein Durchspülen des Harzbehälters mit Rohwasser erfolgen, um Salzrückstände gründlich aus dem Harzbehälter und dem Ionenaustauscherharz auszuwaschen. Rohwasser wird typischerweise aus einer Hausinstallation bezogen, in die die Wasserenthärtungsanlage eingebaut ist.

Die Erfindung sieht vor, dass der Harzbehälter zwischen der Durchführung von Schritt a) und Schritt b) für wenigstens 24 Stunden, bevorzugt für wenigstens zwei Tage, besonders bevorzugt für wenigstens eine Woche, eingelagert wird. Einlagern bedeutet, dass der Harzbehälter ungenutzt an einem Ort verbleibt, ohne in eine Hausinstallation eingebaut zu sein. Es besteht dann die Gefahr, dass sich in dem Harzbehälter Keime stark vermehren, da eine evtl. vor dem Einlagern durchgeführte Desinfektion nur für eine begrenzte Zeit vorhält. Durch die Konservierung mit der Salzsole kann die Keimvermehrung vermieden werden. Auch sind Lagerräume oder Lagerhäuser, die zum Einlagern benutzt werden, regelmäßig nicht oder nur unzureichend beheizbar, so dass eine erhöhte Gefahr von Frostschäden besteht. Auch hiervor bietet die Konservierung mit der Salzsole Schutz.

Weiterhin ist dabei vorgesehen, dass der Harzbehälter nach Abschluss seiner Montage und vor dem Einbau in eine Hausinstallation eingelagert wird.

Zwischen der Montage (Herstellung, Zusammenbau im Werk) und dem Einbau des Harzbehälters vergeht oft eine lange Zeit, in der sich Keime in dem Harzbehälter vermehren können. Vor der erstmaligen Inbetriebnahme der Hausinstallation nach dem Einbau des Harzbehälters müssen diese Keime dann aufwendig ausgespült werden und/oder der Harzbehälter muss desinfiziert werden. Indem das Keimwachstum zwischen Montage und Einbau durch Konservieren mit der Salzsole gehemmt wird, können diese Schritte entfallen oder zumindest vereinfacht werden. Die Montage des Harzbehälters umfasst das Anordnen des Ionenaustauscherharzes in dem Harzbehälter und ggf. das Anbringen von Anschlussstücken, Ventilen oder sonstigen Anbau- bzw. Einbauteilen an oder in dem Harzbehälter. Die Montage wird in einem Herstellerwerk durchgeführt.

Die Verwendung von Salzsole zum Konservieren hat neben der keimhemmenden Wirkung den zusätzlichen Effekt, dass ein Einfrieren des Ionenaustauscherharzes je nach Solekonzentration erst bei Temperaturen deutlich unterhalb von 0°C erfolgt. Wenn Wasser oder Feuchtigkeit in dem Ionenaustauscherharz gefriert, kann das Ionenaustauscherharz beschädigt werden. Der Harzbehälter einer Wasserenthärtungsanlage ist typischerweise im Betrieb stets mit Wasser gefüllt, so dass hier eine Beschädigung durch Einfrieren droht. Aber auch bereits nach der Herstellung des Harzbehälters mit dem Ionenaustauscherharz verbleibt nach einem Prüfbetrieb und Entleeren des Harzbehälters eine Restfeuchtigkeit in dem Ionenaustauscherharz. Bereits geringe Mengen von in dem Ionenaustauscherharz verteiltem Wasser bzw. Feuchtigkeit können beim Gefrieren zu einer Schädigung des Ionenaustauscherharzes durch eine Volumenzunahme bei der Kristallisation führen. Es gilt daher, das Einfrieren von Wasser im Harzbehälter zu vermeiden. Dies kann erfolgen, indem vermieden wird, den Harzbehälter Temperaturen unter 0°C auszusetzen. Dies ist jedoch nicht immer möglich, etwa wenn der Harzbehälter in einem unbeheizten Gebäude in eine Wasserenthärtungsanlage eingebaut ist, oder wenn der Harzbehälter bei Frost transportiert werden muss.

Indem der Harzbehälter erfindungsgemäß mit der Salzsole befüllt bleibt, kann der Gefrierpunkt abgesenkt werden. Ein mit Salzsole befüllter Harzbehälter friert dann erst bei Temperaturen deutlich unter 0°C ein, etwa bei -10°C (mit ca. 58%iger NaCl-Lösung) oder erst bei -15°C (mit ca. 82%iger NaCl-Lösung). Kurzzeitig kann der Harzbehälter noch tieferen Temperaturen ausgesetzt werden, ohne dass in das Ionenaustauscherharz schädigendem Ausmaß die Salzsole einfriert. In der Praxis kann damit ein schädigendes Einfrieren des Harzbehälters in den allermeisten Fällen vermieden werden. Das Konservieren des Ionenaustauscherharzes mit der Salzsole umfasst somit auch einen Frostschutzaspekt.

### Bevorzugte Ausführungsformen der Erfindung

Bei einer bevorzugten Variante der erfindungsgemäßen Verwendung ist vorgesehen, dass die Salzsole eine Solekonzentration von wenigstens 50 %, bevorzugt wenigstens 60 %, besonders bevorzugt wenigstens 70 %, der Sättigungskonzentration von NaCl aufweist. Eine solch große Solekonzentration ist besonders wirksam, um das Wachstum von Keimen zu hemmen. Insbesondere können mit derart großen Solekonzentrationen Keimzahlen in dem Harzbehälter auch verringert werden. Wird die Konservierzeit ausreichend lang gewählt, können sämtliche Keime in dem Harzbehälter abgetötet werden, und eine Neuverkeimung kann verhindert werden. Ferner senkt eine erhöhte Solekonzentration den Gefrierpunkt der Salzsole weiter ab. Dadurch wird der Frostschutz verbessert.

Eine dazu alternative Variante sieht vor, dass die Salzsole eine Solekonzentration zwischen 10 % und 30 % der Sättigungskonzentration von NaCl aufweist. Eine Salzsole mit dieser Solekonzentration wird typischerweise zum Regenerieren des Ionenaustauscherharzes eingesetzt. Diese Salzsole kann daher besonders leicht, insbesondere ohne apparativen Zusatzaufwand, an einer Wasserenthärtungsanlage, in die der Harzbehälter eingebaut ist, bereitgestellt werden. Weiterhin wird bei Verwendung einer Salzsole mit einer niedrigen Solekonzentration der Salzbedarf zum Konservieren verringert.

Besonders bevorzugt ist eine Variante, bei der zwischen den Schritten a) und b) der Harzbehälter für eine Konservierzeit von wenigstens 2 Tagen, insbesondere für eine Konservierzeit von wenigstens einer Woche, mit der Salzsole gefüllt bleibt. Bei solch langen Zeiten ist eine Konservierung des Ionenaustauscherharzes in dem Harzbehälter besonders wirkungsvoll. Weiterhin kann oftmals vermieden werden, erzwungene Regenerationsvorgänge des nicht erschöpften Ionenaustauscherharzes durchführen zu müssen, um eine Verkeimung zu vermindern. Insbesondere kann eine durch Zeitablauf aus hygienischen Gründen vorgesehene Regeneration (etwa nach DIN alle 4 Tage) entfallen, wenn sich die Wasserenthärtungsanlage gerade im Konserviermodus befindet. Stattdessen wird der Harzbehälter nur einmal mit der Salzsole befüllt und bleibt für die Konservierzeit gefüllt. Es kann dadurch der Verbrauch von Salz zur Herstellung der Salzsole reduziert werden.

Eine vorteilhafte Variante ist dadurch gekennzeichnet, dass der Harzbehälter zwischen Schritt a) und Schritt b) transportiert wird, insbesondere von einem Lagerort zu einem Einsatzort oder von einem Einsatzort zu einem Wartungsort. Dadurch kann das Ionenaustauscherharz in dem Harzbehälter auch während des Transports vor Verkeimung und Frost geschützt werden. Es kann somit insbesondere vermieden werden, beim Transport eine Umgebung des Harzbehälters beheizen zu müssen. Typischerweise wird beim Transportieren der Harzbehälter von einem ersten Bauwerk in ein von dem ersten Bauwerk getrenntes, zweites Bauwerk verbracht. Am Einsatzort wird die Wasserenthärtungsanlage typischerweise an einer Wasserinstallation/ Hausinstallation betrieben.

Bei einer bevorzugten Variante ist vorgesehen, dass zwischen Schritt a) und Schritt b) der Harzbehälter in eine Hausinstallation eingebaut wird. Typischerweise wird der Harzbehälter im Rahmen der Erfindung direkt nach der Herstellung mit der Salzsole befüllt. Die Salzsole verbleibt so lange in dem Harzbehälter, bis dieser in die Hausinstallation eingebaut wurde. Typischerweise wird Schritt b) unmittelbar vor einer erstmaligen Inbetriebnahme der Hausinstallation nach dem Einbau des Harzbehälters durchgeführt. Es kann dadurch sichergestellt werden, dass sich Keime in dem Harzbehälter zwischen der Herstellung und dem Einbau in die Hausinstallation nicht vermehren. Das Ionenaustauscherharz enthält herstellungsbedingt eine gewisse Restfeuchtigkeit. Nach der Montage (Herstellung, Zusammenbau im Werk) des Harzbehälters wird dieser in der Regel einige Zeit gelagert, bis er verkauft, bei einem Kunden eingebaut und schließlich in Betrieb genommen wird. Diese Zeit kann unter Umständen einige Wochen bis Monate betragen. Während dieser Zeit kann es insbesondere bei wärmeren Temperaturen im Sommer trotz einer Desinfektion der Anlage nach der Herstellung im Werk zu einer Aufkeimung kommen, da üblicherweise eingesetzte Desinfektionsmittel nur eine begrenzte Zeit lang wirken. Die eingefüllte Salzsole konserviert die im Werk desinfizierte Anlage und schützt vor einer Aufkeimung. Ferner wird das Ionenaustauscherharz in dem Harzbehälter während einer Zwischenlagerung und während eines allfälligen Transports vor Frost geschützt.

Bevorzugt ist auch eine Variante, bei der der Harzbehälter zwischen der Durchführung von Schritt a) und Schritt b) einer Umgebungstemperatur unterhalb 0°C ausgesetzt wird. Wenn der Harzbehälter einer Umgebungstemperatur unter 0°C ausgesetzt wird, besteht die Gefahr, dass das Ionenaustauscherharz durch Frost beschädigt wird. Durch eine Konservierung mit der Salzsole kann ein Einfrieren des Ionenaustauscherharzes verhindert werden. Vorzugsweise wird Schritt a) durchgeführt, bevor der Harzbehälter der Umgebungstemperatur unterhalb 0°C ausgesetzt wird. Schritt b) wird vorzugsweise durchgeführt, nachdem die Umgebungstemperatur, der der Harzbehälter ausgesetzt ist, wieder über 0°C liegt. Das Ionenaustauscherharz ist dann zu keiner Zeit ungeschützt dem Frost ausgesetzt.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine Prinzipskizze einer Wasserenthärtungsanlage zur allgemeinen Erläuterung, während des Befüllens eines Harzbehälters mit einer Salzsole in einem Schritt a);
- Fig. 1b: eine Prinzipskizze der Wasserenthärtungsanlage von Fig. 1a, während des Ausspülens der Salzsole aus dem Harzbehälter in einem Schritt b);
- Fig. 1c: eine Prinzipskizze der Wasserenthärtungsanlage von Fig. 1a, 1b, während der Entnahme von enthärtetem Wasser;
- Fig. 2: ein beispielhaftes Ablaufdiagramm von Herstellung und Betrieb einer Wasserenthärtungsanlage, unter Verwendung von Salzsole zur Konservierung eines Ionenaustauscherharzes im Rahmen der Erfindung;
- Fig. 3: ein Ablaufdiagramm eines Betriebsverfahrens zur allgemeinen Erläuterung.

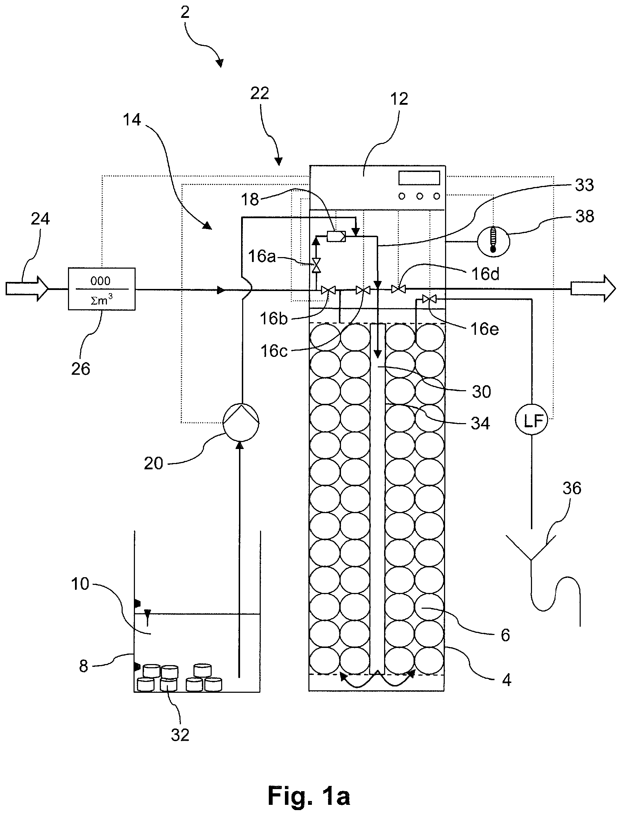

Die **Fig.** 1a zeigt eine Prinzipskizze einer Wasserenthärtungsanlage 2 zur allgemeinen Erläuterung. Die Wasserenthärtungsanlage 2 umfasst einen Harzbehälter 4, in dem ein Ionenaustauscherharz 6 angeordnet ist, ein Vorratsgefäß 8 mit einer gesättigten Salzlösung 10, sowie eine elektronische Steuereinrichtung 12. Die Wasserenthärtungsanlage 2 umfasst weiterhin Mittel 14 zum Befüllen und Ausspülen des Harzbehälters 4. Die Mittel 14 umfassen hier Ventile 16a-16e, ein Durchflussregelorgan 18 und eine Dosierpumpe 20.

Die Ventile 16a-16e sind hier als elektrisch betätigte Sperrventile ausgebildet. Das Durchflussregelorgan 18 ist hier als ein Drosselventil ausgebildet. Die elektronische Steuereinrichtung 12 ist über Steuerleitungen 22 mit den Mitteln 14 verbunden, um diese ansteuern und einstellen zu können.

Die Wasserenthärtungsanlage 2 ist eingangsseitig an eine Wasserzuführung 24 angeschlossen. Die Wasserzuführung 24 ist an ein Wassernetz (nicht dargestellt), etwa ein öffentliches Trinkwassernetz, angeschlossen. Aus der Wasserzuführung 24 strömt Rohwasser über einen Wassermengenzähler 26 zu der Wasserenthärtungsanlage 2. Auch der Wassermengenzähler 26 ist über eine der Steuerleitungen 22 mit der elektronischen Steuereinrichtung 12 verbunden. Die elektronische Steuereinrichtung 12 kann in Abhängigkeit von der Wassermenge, die durch die Wasserenthärtungsanlage 2 geflossen ist, eine Regeneration des Ionenaustauscherharzes 6 auslösen.

In Fig. 1a ist durch Pfeile die Durchströmung der Wasserenthärtungsanlage 2 beim Befüllen des Harzbehälters 4 mit einer Salzsole 30 in einem Schritt a) dargestellt. Aus dem Vorratsgefäß 8 wird von der Dosierpumpe 20 gesättigte Salzlösung 10 gefördert. Die gesättigte Salzlösung 10 entsteht durch Auflösen von Natrium-Chlorid-Tabletten 32 in dem Vorratsgefäß 8. Von der Wasserzuführung 24 aus strömt Rohwasser durch das Ventil 16a und wird von dem Drosselorgan 18 der gesättigten Salzlösung 10 beigemischt. Es entsteht dadurch in einer Mischstrecke 33 die Salzsole 30. Die Salzsole 30 strömt von oben in ein Steigrohr 34, das hier zentral in dem Harzbehälter 4 angeordnet ist. Die Salzsole 30 strömt durch das Steigrohr 34 nach unten. Unterenends tritt die Salzsole 30 aus dem Steigrohr 34 aus und strömt unterseitg im Harzbehälter 4 nach radial außen. Sodann strömt die Salzsole 30 nach oben in das Ionenaustauscherharz 6 hinein und durchdringt dieses. Das Ionenaustauscherharz 6 ist hier ringförmig um das Steigrohr 34 herum in dem hohlzylindrischen Harzbehälter 4 angeordnet. Evtl. noch in dem Ionenaustauscherharz 6 vorhandene Reste von enthärtetem Wasser können durch das Ventil 16e in einen Abfluss 36 abfließen. Die Ventile 16b-16d sind während des Befüllens des Harzbehälters 4 mit der Salzsole 30 geschlossen. Nachdem der Harzbehälter 4 vollständig mit der Salzsole 30 gefüllt ist, werden auch die Ventile 16a und 16e geschlossen. Die Salzsole 30 verbleibt sodann für eine Konservierzeit von wenigstens acht Stunden in dem Harzbehälter 4. Während dieser Konservierzeit verhindert bzw. vermindert die Salzsole 30 eine Aufkeimung im Ionenaustauscherharz 6 innerhalb des Harzbehälters 4.

Die Wasserenthärtungsanlage 2 umfasst hier auch einen Temperatursensor 38. Die elektronische Steuereinrichtung 12 kann anhand einer von dem Temperatursensor 38 gemessenen Umgebungstemperatur der Wasserenthärtungsanlage 2 entscheiden, ob eine Konservierung des Ionenaustauscherharzes 6 zum Schutz vor Frostschäden eingeleitet werden soll. Im dargestellten Fall von Fig. 1a hat der Temperatursensor 38 eine Umgebungstemperatur von unter 0°C gemessen. Die elektronische Steuereinrichtung 12 hat daraufhin die Mittel 14, umfassend die Ventile 16a-16e, das Drosselorgan 18 und die Pumpe 20, derart angesteuert, dass der Harzbehälter 4 in der oben beschriebenen Weise mit der Salzsole 30 befüllt wird. Das Ionenaustauscherharz 6 ist somit vor einem Einfrieren bei Frost (hier bis -12°C) geschützt. Gleichzeitig wird das Ionenaustauscherharz 6 durch die Salzsole regeneriert, indem in dem Ionenaustauscherharz 6 gebundene Calcium- und Magnesium-Ionen durch Natrium-Ionen ersetzt werden. Wenn die Umgebungstemperatur wieder über 0°C angestiegen ist, kann der Konserviervorgang beendet werden, insbesondere sobald eine Wasserentnahme versucht wird. Es steht dann wieder die volle Kapazität der Wasserenthärtungsanlage 2 zur Bereitstellung von enthärtetem Wasser zur Verfügung.

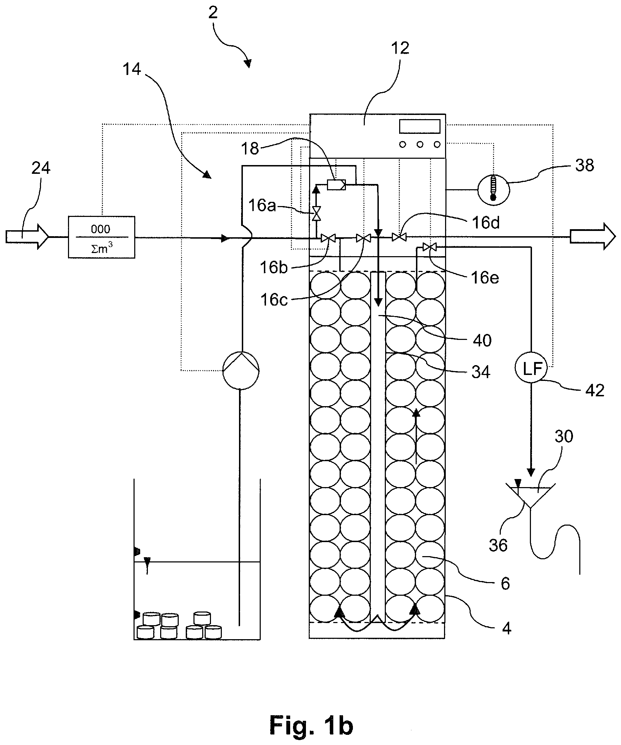

In der **Fig. 1b** ist dargestellt, wie die Salzsole 30 in einem Schritt b) aus dem Harzbehälter 4 der Wasserenthärtungsanlage 2 ausgespült wird. Nachdem der Temperatursensor 38 der elektronischen Steuereinrichtung 12 übermittelt hatte, dass die Umgebungstemperatur der Wasserenthärtungsanlage 2 wieder über 0°C liegt, wurde versucht, enthärtetes Wasser aus der Wasserenthärtungsanlage 2 zu entnehmen. Die elektronische Steuereinrichtung 12 hat diesen Entnahmeversuch durch einen Druckabfall ausgangsseitig des geschlossenen Ventils 16d erkannt. In dem Ventil 16d ist dazu ausgangsseitig ein Drucksensor angeordnet und mit der elektronischen Steuereinrichtung 12 verbunden. Die elektronische Steuereinrichtung 12 hat daraufhin die Mittel 14 so angesteuert, dass die Salzsole 30 aus dem Harzbehälter 4 ausgespült wird.

Die Durchströmung der Wasserenthärtungsanlage 2 beim Ausspülen der Salzsole 30 aus dem Harzbehälter 4 ist in der Fig. 1b durch Pfeile angegeben. Von der Wasserzuführung 24 strömt Rohwasser 40 aus dem Wassernetz zu der Wasserenthärtungsanlage 2. Das Rohwasser 40 fließt durch das geöffnete Ventil 16a und das Drosselorgan 18 von oben in das Steigrohr 34 hinein. Die Ventile 16b-16d sind geschlossen. Das Rohwasser 40 verlässt das Steigrohr 34 unterenends und strömt in dem Harzbehälter 4 nach radial außen. Das Rohwasser 40 steigt sodann in dem Ionenaustauscherharz 6 auf und verdrängt die Salzsole 30. Die Salzsole 30 fließt durch das geöffnete Ventil 16e in den Abfluss 36. Die Salzsole 30 durchfließt dabei einen Leitfähigkeitssensor 42. Anhand der von dem Leitfähigkeitssensor 42 gemessenen Leitfähigkeit erkennt die elektronische Steuereinrichtung 12, ob die Salzsole bereits vollständig aus dem Harzbehälter 4 ausgespült wurde. Wenn dies der Fall ist, strömt Rohwasser 40 mit einer geringeren Leitfähigkeit durch den Leitfähigkeitssensor 42. Der Ausspülvorgang wird dann beendet, indem die elektronische Steuereinrichtung 12 auch die Ventile 16a und 16e schließt. Der Harzbehälter 4 ist dann vollständig mit Rohwasser 40 gefüllt, das in der Folge seine Calcium- und Magnesium-Ionen an das Ionenaustauscherharz 6 abgibt. Es kann sodann wieder enthärtetes Wasser aus der Wasserenthärtungsanlage 2 entnommen werden.

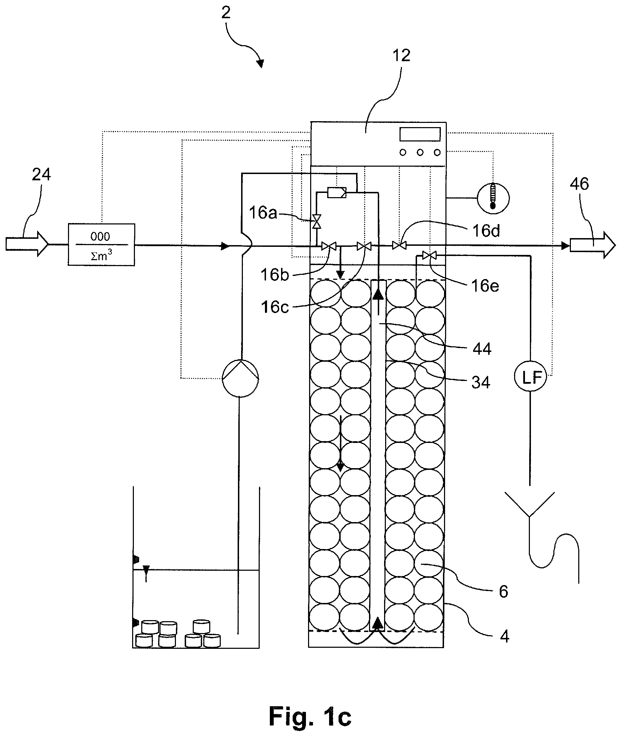

In der **Fig. 1c** ist die Entnahme von enthärtetem Wasser 44 aus der Wasserenthärtungsanlage 2 von den Fign. 1a, 1b dargestellt. Von der Wasserzuführung 24 strömt Rohwasser zu der Wasserenthärtungsanlage 2. Das Rohwasser fließt durch das geöffnete Ventil 16b von oben in den Harzbehälter 4 und durchströmt das Ionenaustauscherharz 6 von oben nach unten. Die Ventile 16a, 16c und 16e werden während der Entnahme von enthärtetem Wasser 44 aus der Wasserenthärtungsanlage 2 von der elektronischen Steuereinrichtung 12 geschlossen gehalten. Während das Rohwasser das Ionenaustauscherharz 6 durchströmt werden die in dem Rohwasser gelösten Calcium- und Magnesium-Ionen gegen Natrium-Ionen von dem Ionenaustauscherharz 6 ausgetauscht, so dass enthärtetes Wasser 44 entsteht. Das enthärtete Wasser 44 strömt unten in dem Harzbehälter 4 nach innen in das Steigrohr 34 hinein. Das enthärtete Wasser 44 fließt so dann in dem Steigrohr 34 nach oben und durch das geöffnete Ventil 16d zu einem Entnahmeanschluss 46 der Wasserenthärtungsanlage 2. Von dem Entnahmeanschluss 46 aus kann das enthärtete Wasser 44 über ein Hausleitungsnetz (nicht dargestellt) weiter verteilt werden.

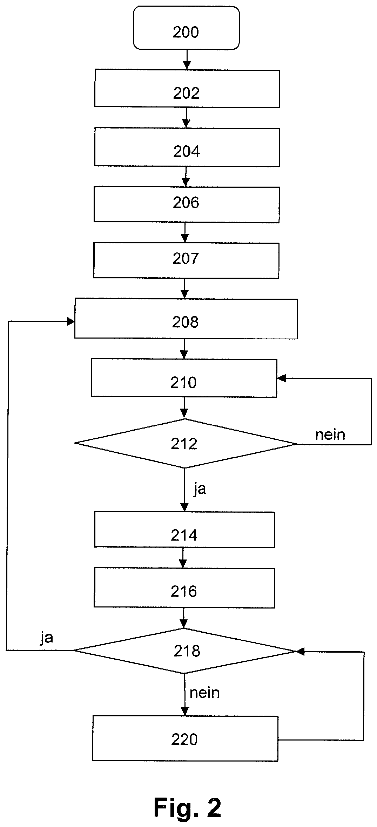

Die **Fig. 2** zeigt ein beispielhaftes Ablaufdiagramm von Herstellung und Betrieb einer Wasserenthärtungsanlage, unter Verwendung von Salzsole zur Konservierung eines Ionenaustauscherharzes im Rahmen der Erfindung. Man beachte, dass der sich an die Herstellung und den Einbau der Wasserenthärtungsanlage anschließende Betrieb nicht mehr Teil der erfindungsgemäßen Verwendung ist.

In einem Schritt 200 erfolgt der Start der Herstellung und des anschließenden Betriebs (etwa durch Eingang eines Kundenauftrags). Es erfolgt dann in einem Schritt 202 die Montage eines Harzbehälters. Es wird dabei ein Ionenaustauscherharz in dem Harzbehälter angeordnet. Weiterhin können Ventile, Leitungen, Sensoren und dergleichen an dem Harzbehälter angebracht werden. In dem Schritt 202 wird der Harzbehälter auch in eine Wasserenthärtungsanlage eingebaut. Die Wasserenthärtungsanlage umfasst neben dem Harzbehälter mit dem Ionenaustauscherharz ein Vorratsgefäß für konzentrierte Salzlösung und eine elektronische Steuereinrichtung.

Der montierte Harzbehälter wird sodann in einem Schritt 204 desinfiziert und mit einer Salzsole befüllt. Das Desinfizieren kann vor dem Befüllen mit der Salzsole erfolgen, etwa indem der Harzbehälter mit einem Desinfektionsmittel durchgespült wird. Alternativ kann ein Desinfektionsmittel der Salzsole beigemischt werden. Durch die Befüllung mit der Salzsole ist das Ionenaustauscherharz in dem Harzbehälter vor Verkeimung und Frostschäden geschützt. Der Harzbehälter kann somit in einem Schritt 206 eingelagert und/oder transportiert werden, ohne dass die Gefahr besteht, dass in dem Ionenaustauscherharz enthaltene Restfeuchtigkeit einfriert und das Ionenaustauscherharz beschädigt. Erfindungsgemäß wird der Harzbehälter zunächst an einen Lagerort verbracht und dort eingelagert. Anschließend kann dann ein Transport zu einem Einbauort erfolgen. Während der Dauer des Einlagerns und während des Transports ist das Ionenaustauscherharz in dem Harzbehälter durch die Salzsole vor Frost und Verkeimung geschützt.

Am Einbauort wird die Wasserenthärtungsanlage in einem Schritt 207 in die Hausinstallation, etwa eines Wohn- oder Geschäftshauses, eingebaut, d.h. die Wasserenthärtungsanlage wird eingangsseitig an ein Wassernetz und ausgangsseitig an ein Hausleitungsnetz angeschlossen. Ggf. erfolgt in dem Schritt 207 auch der Zusammenbau der Wasserenthärtungsanlage, insbesondere wird dabei der Harzbehälter mit der elektronischen Steuereinrichtung und dem Vorratsgefäß für die konzentrierte Salzlösung verbunden. In einem Schritt 208 wird sodann die Salzsole aus dem Harzbehälter ausgespült, so dass die Wasserenthärtungsanlage in Betreib genommen werden kann. Da das Ionenaustauscherharz während Lagerung und Transport mit der Salzsole getränkt war, steht unmittelbar die volle Kapazität der Wasserenthärtungsanlage zur Verfügung. Eine Regeneration des Ionenaustauscherharzes ist daher nicht notwendig. Optional kann jedoch eine Regeneration mit gleichzeitiger Desinfektion durchgeführt werden. Ein Desinfektionsmittel kann dabei elektrolytisch in einer zum regenerieren verwendeten Salzsole erzeugt werden oder dieser zudosiert werden.

Die Wasserenthärtungsanlage steht sodann in einem Schritt 210 für die Enthärtung von Wasser in einem Normalbetrieb zur Verfügung. Während des Normalbetriebs überprüft die elektronische Steuereinrichtung anhand eines Kriteriums 212, ob die Wasserenthärtungsanlage in den Konserviermodus geschaltet werden soll. Ein Umschalten in den Konserviermodus erfolgt hier, wenn für eine vordefinierte Nichtnutzungsdauer, die beispielsweise zwei Tage betragen kann, der Wasserenthärtungsanlage kein enthärtetes Wasser entnommen wurde (Stagnation). Ebenso wird die Wasserenthärtungsanlage in den Konserviermodus umgeschaltet, wenn eine Umgebungstemperatur der Wasserenthärtungsanlage unter 0°C fällt. Der Konserviermodus kann auch von einem Benutzer der Wasserenthärtungsanlage manuell eingestellt oder programmiert werden. Der Konserviermodus kann auch automatisch aufgenommen werden, wenn ein vorbekannter Nichtentnahme-Zeitraum beginnt, der länger als 8 Stunden dauert (etwa bei einem Urlaub aller Verwender der Wasserenthärtungsanlage). Im Konserviermodus wird zunächst in einem Schritt 214 entweder die Wasserentnahme aus der Wasserenthärtungsanlage abgesperrt oder die Wasserenthärtungsanlage wird auf einen Bypassbetrieb umgestellt, so dass nichtenthärtetes Wasser (Rohwasser) an dem Harzbehälter vorbeigeleitet und unbehandelt in das Hausleitungsnetz eingespeist wird. Sodann erfolgt in einem Schritt 216 die Befüllung des Harzbehälters mit der Salzsole. Es wird dazu konzentrierte Salzlösung aus dem Vorratsgefäß verwendet, die mit Rohwasser verdünnt werden kann.

Solange ein Abbruchkriterium 218 nicht erfüllt ist, verbleibt der Harzbehälter im mit der Salzsole befüllten, konservierten Status 220. Sobald das Abbruchkriterium 218 erfüllt ist, wird das erfindungsgemäße Betriebsverfahren mit dem Schritt 208 fortgesetzt. Das Abbruchkriterium 218 kann erfüllt sein, wenn ein Sensor, etwa ein ausgangsseitiger Drucksensor der Wasserenthärtungsanlage, erkennt, dass versucht wird, enthärtetes Wasser aus der Wasserenthärtungsanlage zu entnehmen. Das Abbruchkriterium 218 wird bevorzugt spätestens dann erfüllt, wenn ein Nichtentnahme-Zeitraum endet, der in der elektronischen Steuereinrichtung hinterlegt worden ist. Vorteilhafterweise ist das Abbruchkriterium 218 bereits eine kurze Zeitspanne, etwa eine halbe Stunde oder eine Stunde, vor einem programmierten (gespeicherten) Ende des Nichtentnahme-Zeitraums erfüllt, so dass Schritt 208 zum Ende des Nichtentnahme-Zeitraums abgeschlossen ist. Das Betriebsverfahren wird dann mit dem Schritt 208 fortgesetzt. D.h. die Salzsole wird aus dem Harzbehälter ausgespült. Optional kann eine Regeneration mit Desinfektion erfolgen. Zwar wird eine Aufkeimung durch das Konservieren des Ionenaustauscherharzes in der Salzsole wirksam vermindert, doch kann ein Benutzer der Wasserenthärtungsanlage, insbesondere nach einer sehr langen Konservierzeit, den Wunsch verspüren, das Ionenaustauscherharz sicherheitshalber dennoch zu desinfizieren.

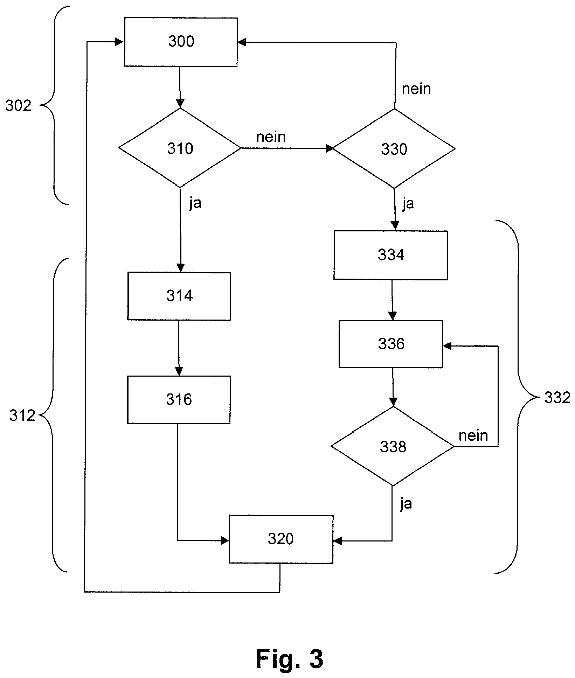

Die **Fig. 3** zeigt ein Ablaufdiagramm eines Betriebsverfahrens für eine Wasserenthärtungsanlage zur allgemeinen Erläuterung. Die Wasserenthärtungsanlage umfasst einen Harzbehälter mit einem Ionenaustauscherharz, ein Vorratsgefäß mit konzentrierter Salzlösung und eine elektronische Steuereinrichtung. Die Wasserenthärtungsanlage ist eingangsseitig an ein Wassernetz und ausgangsseitig an ein Hausleitungsnetz angeschlossen.

Zunächst arbeitet die Wasserenthärtungsanlage in einem Enthärterbetrieb 300. Der Enthärterbetrieb 300 erfolgt im Rahmen eines Normalbetriebsmodus 302. Während des Enthärterbetriebs 300 kann der Wasserenthärtungsanlage enthärtetes Wasser über das Hausleitungsnetz entnommen werden. Zur Herstellung des enthärteten Wassers wird Rohwasser aus dem Wassernetz durch den Harzbehälter geleitet. In dem Harzbehälter strömt das Rohwasser durch das Ionenaustauscherharz, so dass die in dem Rohwasser enthaltenen Calcium- und Magnesium-Ionen durch Natrium-Ionen ersetzt werden. Somit entsteht enthärtetes Wasser, das aus dem Harzbehälter in das Hausleitungsnetz eingespeist wird.

Im Normalbetriebsmodus 302 überprüft die elektronische Steuereinrichtung regelmäßig (z.B. alle 60 Sekunden), ob ein Regenerierkriterium 310 erfüllt ist. Das Regenerierkriterium 310 ist hier erfüllt, wenn eine vorbestimmte Menge enthärtetes Wasser aus der Wasserenthärtungsanlage entnommen wurde, oder wenn seit der letzten Regeneration eine vorbestimmte Zeitspanne (typischerweise vier Tage) verstrichen ist.

Wenn das Regenerierkriterium 310 erfüllt ist, wird die Wasserenthärtungsanlage in einen Regeneriermodus 312 geschaltet. Im Regeneriermodus 312 kann der Harzbehälter kein enthärtetes Wasser zur Verfügung stellen; falls die Wasserenthärtungsanlage mehrere Harzbehälter aufweist, kann jedoch gegebenenfalls ein anderer Harzbehälter in dieser Zeit enthärtetes Wasser bereitstellen. Nach Einleiten des Regeneriermodus 312 wird zunächst der Harzbehälter in einem Schritt 314 mit einer Salzsole befüllt, wobei die Salzsole eine Solekonzentration aufweist, die typischerweise zwischen 10 % und 30 % der Sättigungskonzentration beträgt. Die Salzsole wird sodann während einer Regenerierphase 316 für eine Regenerierzeit in dem Harzbehälter belassen. Die Regenerierzeit beträgt typischerweise zwischen 15 und 30 Minuten. Nach Ablauf der Regenerierzeit wird der Harzbehälter in einem Schritt 320 mit Rohwasser ausgespült. Die Wasserenthärtungsanlage wird sodann wieder auf Enthärterbetrieb 300 geschaltet.

Wenn das Regenerierkriterium 310 nicht erfüllt ist, wird überprüft, ob ein Konservierkriterium 330 erfüllt ist. Das Konservierkriterium 330 ist hier erfüllt, wenn für eine vorbestimmte Nichtnutzungsdauer kein enthärtetes Wasser aus der Wasserenthärtungsanlage entnommen wurde. Das Konservierkriterium 330 ist ebenfalls erfüllt, wenn die elektronische Steuereinrichtung erkannt hat, dass ein Nichtentnahme-Zeitraum, der eine vorbestimmte Mindestdauer (typischerweise zwei Tage) übersteigt, begonnen hat. Schließlich ist das Konservierkriterium 330 auch erfüllt, wenn ein Benutzer der elektronischen Steuereinrichtung durch eine manuelle Eingabe mitteilt, dass eine Konservierung eingeleitet werden soll. Die manuelle Eingabe kann direkt an der elektronischen Steuereinrichtung oder drahtlos über ein mit der Wasserenthärtungsanlage verbundenes Elektronikgerät erfolgen. Wenn auch das Konservierkriterium 330 nicht erfüllt ist, verbleibt die Wasserenthärtungsanlage im Enthärterbetrieb 300.

Wenn das Konservierkriterium 330 erfüllt ist, wird ein Konserviermodus 332 eingeleitet. Im Konserviermodus 332 kann der Wasserenthärtungsanlage kein enthärtetes Wasser entnommen werden; selbst wenn die Wasserenthärtungsanlage mehrere Harzbehälter aufweist, werden grundsätzlich alle Harzbehälter in die Konservierung einbezogen. Im Konserviermodus 332 wird der Harzbehälter zunächst in einem Schritt 334 mit einer Salzsole befüllt, wobei die Salzsole eine Solekonzentration aufweist, die typischerweise zwischen 50 % und 70 % der Sättigungskonzentration beträgt. Die Salzsole verbleibt sodann während einer Konservierphase 336 für eine Konservierzeit von wenigstens acht Stunden in dem Harzbehälter. Während der Konservierzeit wird das Ionenaustauscherharz auch regeneriert.

Im Konserviermodus 332 überprüft die elektronische Steuereinrichtung regelmäßig, ob ein Abbruchkriterium 338 erfüllt ist. Das Abbruchkriterium 338 kann beispielsweise erfüllt sein, wenn eine vorgegebene Konservierzeit von mehr als acht Stunden verstrichen ist, wenn ein vordefinierter Endzeitpunkt erreicht ist, oder wenn versucht wird, der Wasserenthärtungsanlage enthärtetes Wasser zu entnehmen. Wenn das Abbruchkriterium 338 nicht erfüllt ist, bleibt der Harzbehälter mit der Salzsole befüllt, so dass die Konservierphase 336 weiter fortdauert. Wenn das Abbruchkriterium 338 erfüllt ist, wird der Harzbehälter in dem Schritt 320 mit Rohwasser ausgespült. Sodann wird die Wasserenthärtungsanlage wieder auf Enthärterbetrieb 300 im Normalbetriebsmodus 302 geschaltet.

Man beachte, dass die Überprüfung des Regenerierkriteriums 310 und des Konservierkriteriums 330 in beliebiger Reihenfolge oder auch unabhängig voneinander im Normalbetriebsmodus 302 erfolgen können.

Mikrobiologische Untersuchungen der Erfinder, vergleiche die untenstehende **Tabelle 1**, haben ergeben, dass die Aufkeimung in einer Salzsole mit zunehmender Konzentration der Salzsole abgeschwächt wird. Salzsole besitzt also eine konservierende Wirkung, die im Rahmen der vorliegenden Erfindung ausgenutzt wird. Je nach Konzentration und Einwirkdauer der Salzsole wird sogar eine deutlich keimreduzierende Wirkung beobachtet.

**Tabelle 1: Aus einem kontaminierten Ionenaustauscherharz in einem Harzbehälter wurden jeweils 50 ml-Proben für eine Konservierung mit Salzsolen verschiedener Konzentration entnommen. In der Tabelle angegeben sind die Koloniezahlen nach 14-tägiger Lagerung von jeweils 50 ml des kontaminierten Ionenaustauscherharzes in 200 ml Salzlösung bei 22°C und 36°C. Die Angaben bei der Salzsolekonzentration 0% (reines Wasser) beziehen sich auf eine nach 14 Tagen aus dem kontaminierten Ionenaustauscherharz entnommenen Kontrollprobe, die in dieser Zeit im Harzbehälter normalem Wasser ausgesetzt war.**

| Solekonzentration [% der Sättigungskonzentration] | Koloniezahl 22°C [KBE/ml] | Koloniezahl 36°C [KBE/ml] |
|---|---|---|
| 0 (reines Wasser) | 450.000 | 236.000 |
| 25 | 18.300 | 17.500 |
| 50 | 2.470 | 4.800 |
| 60 | 24 | 0 |
| 70 | 0 | 0 |

Aus den experimentellen Daten ist ersichtlich, dass bereits mit einer 25%-igen Salzsole eine deutliche Keimreduktion um ca. eine Größenordnung gegenüber der Kontrollprobe erzielbar ist. Mit einer 50%-igen Salzsole kann die Keimzahl um ca. eine weitere Größenordnung reduziert werden. Mit Solekonzentrationen ab 60% der Sättigungskonzentration können vorhandene Keime praktisch vollständig abgetötet werden.

### Bezugszeichenliste

- 2: Wasserenthärtungsanlage
- 4: Harzbehälter
- 6: Ionenaustauscherharz
- 8: Vorratsgefäß
- 10: gesättigte Salzlösung
- 12: elektronische Steuereinrichtung
- 14: Mittel
- 16a-16e: Ventile
- 18: Durchflussregelorgan
- 20: Dosierpumpe
- 22: Steuerleitungen
- 24: Wasserzuführung
- 26: Wassermengenzähler
- 30: Salzsole
- 32: Natriumchlorid-Tabletten
- 34: Steigrohr
- 36: Abfluss
- 38: Temperatursensor
- 40: Rohwasser
- 42: Leitfähigkeitssensor
- 44: enthärtetes Wasser
- 46: Entnahmeanschluss

- 200: Start von Herstellung und Betrieb einer Wasserenthärtungsanlage
- 202: Montage eines Harzbehälters
- 204: Harzbehälter desinfizieren und mit Salzsole befüllen
- 206: Einlagern und/oder transportieren
- 207: Einbau der Wasserenthärtungsanlage in eine Hausinstallation
- 208: Ausspülen der Salzsole
- 210: Normalbetrieb (Enthärtung von Wasser)
- 212: Kriterium: Umschalten in Konserviermodus?
- 214: Entnahmesperre oder Bypassbetrieb
- 216: Befüllen des Harzbehälters mit Salzsole
- 218: Abbruchkriterium: Konserviermodus beenden?
- 220: konservierter Status

- 300: Enthärterbetrieb
- 302: Normalbetriebsmodus
- 310: Regenerierkriterium: Regeneration durchführen?
- 312: Regeneriermodus
- 314: Harzbehälter mit Salzsole befüllen
- 316: Regenerierphase
- 320: Harzbehälter ausspülen
- 330: Konservierkriterium: Ionenaustauscherharz konservieren?
- 332: Konserviermodus
- 334: Harzbehälter mit Salzsole befüllen
- 336: Konservierphase: Harzbehälter bleibt mit der Salzsole befüllt
- 338: Abbruchkriterium: Konserviermodus beenden?

## Patentansprüche

1. Verwendung einer Salzsole (30) in einem Harzbehälter (4) für eine Wasserenthärtungsanlage (2), wobei der Harzbehälter (4) ein Ionenaustauscherharz (6) enthält, mit den Schritten
a) Befüllen (216; 314) des Harzbehälters (4) mit der Salzsole (30),
b) Ausspülen (208; 320) der Salzsole (30) aus dem Harzbehälter (4),
wobei die Salzsole (30) zum Konservieren des Ionenaustauscherharzes (6) zwischen den Schritten a) und b) verwendet wird,
und wobei zwischen den Schritten a) und b) der Harzbehälter (4) für eine Konservierzeit von wenigstens 8 Stunden mit der Salzsole (30) gefüllt bleibt (220; 336),
**dadurch gekennzeichnet,**
**dass** vor und/oder während Schritt a) ein Desinfektionsmittel in den Harzbehälter (4) eingeleitet wird (204),
**dass** der Harzbehälter (4) zwischen der Durchführung von Schritt a) und Schritt b) nach Abschluss seiner Montage (202) in einem Herstellerwerk, wobei das Ionenaustauscherharz (6) im Harzbehälter (4) angeordnet wird,
und vor dem Einbau in eine Hausinstallation (207) für wenigstens 24 Stunden eingelagert wird (206),
**dass** bei der Montage (202) der Harzbehälter (4) in die Wasserenthärtungsanlage (2) eingebaut wird, wobei die Wasserenthärtungsanlage (2) auch ein Vorratsgefäß (8) für konzentrierte Salzlösung und eine elektronische Steuereinrichtung (12) umfasst,
und **dass** beim Einbau (207) die Wasserenthärtungsanlage (2) in die Hausinstallation eingebaut wird.

2. Verwendung nach Anspruch 1, **dadurch gekennzeichnet, dass** die Salzsole (30) eine Solekonzentration von wenigstens 50 %, bevorzugt wenigstens 60 %, besonders bevorzugt wenigstens 70 %, der Sättigungskonzentration von NaCl aufweist.

3. Verwendung nach Anspruch 1, **dadurch gekennzeichnet, dass** die Salzsole (30) eine Solekonzentration zwischen 10 % und 30 % der Sättigungskonzentration von NaCl aufweist.

4. Verwendung nach einem der vorhergehenden Ansprüche, **dadurch gekennzeichnet, dass** zwischen den Schritten a) und b) der Harzbehälter (4) für eine Konservierzeit von wenigstens 2 Tagen, insbesondere für eine Konservierzeit von wenigstens einer Woche, mit der Salzsole (30) gefüllt bleibt (220; 336).

5. Verwendung nach einem der vorhergehenden Ansprüche, **dadurch gekennzeichnet, dass** der Harzbehälter (4) zwischen Schritt a) und Schritt b) transportiert wird (206), insbesondere von einem Lagerort zu einem Einsatzort.

6. Verwendung nach einem der vorhergehenden Ansprüche, **dadurch gekennzeichnet, dass** zwischen Schritt a) und Schritt b) der Harzbehälter (4) in die Hausinstallation eingebaut wird (207).

7. Verwendung nach einem der Ansprüche 1 bis 6, **dadurch gekennzeichnet, dass** das Desinfektionsmittel elektrolytisch in der Salzsole (30) erzeugt wird.

8. Verwendung nach einem der Ansprüche 1 bis 6, **dadurch gekennzeichnet, dass** das Desinfektionsmittel der Salzsole (30) zugegeben wird.

9. Verwendung nach einem der vorhergehenden Ansprüche, **dadurch gekennzeichnet, dass** der Harzbehälter (4) zwischen der Durchführung von Schritt a) und Schritt b) einer Umgebungstemperatur unterhalb 0°C ausgesetzt wird.

10. Verwendung nach einem der vorhergehenden Ansprüche, **dadurch gekennzeichnet, dass** der Harzbehälter (4) zwischen der Durchführung von Schritt a) und Schritt b) für wenigstens zwei Tage eingelagert wird (206).

11. Verwendung nach einem der vorhergehenden Ansprüche, **dadurch gekennzeichnet, dass** der Harzbehälter (4) zwischen der Durchführung von Schritt a) und Schritt b) für wenigstens eine Woche eingelagert wird (206).

## Claims

1. The use of a brine (30) in a resin container (4) for a water softening system (2), wherein the resin container (4) contains an ion exchange resin (6), comprising the steps of
a) filling (216; 314) the resin container (4) with the brine (30),
b) rinsing (208; 320) the brine (30) from the resin container (4), wherein the brine (30) is used to preserve the ion exchange resin (6) between steps a) and b),
and wherein between steps a) and b) the resin container (4) remains filled (220; 336) with the brine (30) for a preservation time of at least 8 hours,
**characterized**
**in that** a disinfectant is introduced (204) into the resin container (4) before and/or during step a),
**in that** between carrying out step a) and step b) after completion of the assembly (202) of the resin container in a manufacturing plant, wherein the ion exchange resin (6) is placed in the resin container (4), and before installation in a domestic installation (207), the resin container (4) is stored (206) for at least 24 hours,
**in that** during the assembly (202), the resin container (4) is installed in the water softening system (2), wherein the water softening system (2) also includes a storage container (8) for concentrated salt solution and an electronic control device (12), and in that during installation (207) the water softening system (2) is installed in the domestic installation.

2. The use according to claim 1, **characterized in that** the brine (30) has a brine concentration of at least 50%, preferably at least 60%, particularly preferably at least 70%, of the saturation concentration of NaCl.

3. The use according to claim 1, **characterized in that** the brine (30) has a brine concentration of between 10% and 30% of the saturation concentration of NaCl.

4. The use according to any one of the preceding claims, **characterized in that** between steps a) and b) the resin container (4) remains filled (220; 336) with the brine (30) for a preservation time of at least 2 days, in particular for a preservation time of at least one week.

5. The use according to any one of the preceding claims, **characterized in that** the resin container (4) is transported (206) between step a) and step b), in particular from a storage site to a site of use.

6. The use according to any one of the preceding claims, **characterized in that** between step a) and step b) the resin container (4) is installed (207) in the domestic installation.

7. The use according to any one of claims 1 to 6, **characterized in that** the disinfectant is generated electrolytically in the brine (30).

8. The use according to any one of claims 1 to 6, **characterized in that** the disinfectant is added to the brine (30).

9. The use according to any one of the preceding claims, **characterized in that** the resin container (4) is exposed to a surrounding temperature below 0°C between the performance of step a) and step b).

10. The use according to any one of the preceding claims, **characterized in that** the resin container (4) is stored (206) for at least two days between the performance of step a) and step b).

11. The use according to any one of the preceding claims, **characterized in that** the resin container (4) is stored (206) for at least one week between the performance of step a) and step b).

## Revendications

1. Utilisation d'une saumure (30) dans un réservoir de résine (4) destiné à une installation d'adoucissement d'eau (2), le réservoir de résine (4) contenant une résine échangeuse d'ions (6), comprenant les étapes consistant à :
a) remplir (216 ; 314) le réservoir de résine (4) avec la saumure (30),
b) rincer (208 ; 320) la saumure (30) issue du réservoir de résine (4),
la saumure (30) étant utilisée pour conserver la résine échangeuse d'ions (6) entre les étapes a) et b),
et le réservoir de résine (4) restant rempli (220 ; 336) de la saumure (30) entre les étapes a) et b) pendant une période de conservation d'au moins 8 heures, **caractérisée en ce que**
avant et/ou pendant l'étape a), un désinfectant est introduit (204) dans le réservoir de résine (4),
le réservoir de résine (4) est stocké (206), la résine échangeuse d'ions (6) étant agencée dans le réservoir de résine (4), pendant au moins 24 heures dans une usine de production après l'achèvement de son assemblage (202), entre la mise en oeuvre de l'étape a) et de l'étape b), et avant l'installation dans une installation domestique (207),
lors de l'assemblage (202), le réservoir de résine (4) est installé dans le système d'adoucissement d'eau (2), le système d'adoucissement d'eau (2) comprenant également un réservoir de stockage (8) pour de la solution saline concentrée et un dispositif de commande électronique (12),
et, lors de l'assemblage (207), le système d'adoucissement d'eau (2) est installé dans l'installation domestique.

2. Utilisation selon la revendication 1, **caractérisée en ce que** la saumure (30) présente une concentration en saumure d'au moins 50 %, de manière préférée d'au moins 60 %, de manière particulièrement préférée d'au moins 70 % de la concentration de saturation de NaCl.

3. Utilisation selon la revendication 1, **caractérisée en ce que** la saumure (30) présente une concentration en saumure comprise entre 10 % et 30 % de la concentration de saturation en NaCl.

4. Utilisation selon l'une quelconque des revendications précédentes, **caractérisée en ce que** le réservoir de résine (4) reste rempli (220 ; 336) de saumure (30) entre les étapes a) et b) pendant un temps de conservation d'au moins 2 jours, en particulier pendant un temps de conservation d'au moins une semaine.

5. Utilisation selon l'une quelconque des revendications précédentes, **caractérisée en ce que** le réservoir de résine (4) est transporté (206) entre l'étape a) et l'étape b), en particulier d'un lieu de stockage à un lieu d'utilisation.

6. Utilisation selon l'une quelconque des revendications précédentes, **caractérisée en ce que** le réservoir de résine (4) est installé (207) dans l'installation domestique entre l'étape a) et l'étape b).

7. Utilisation selon l'une quelconque des revendications 1 à 6, **caractérisée en ce que** le désinfectant est produit de manière électrolytique dans la saumure (30).

8. Utilisation selon l'une quelconque des revendications 1 à 6, **caractérisée en ce que** le désinfectant est ajouté à la saumure (30).

9. Utilisation selon l'une quelconque des revendications précédentes, **caractérisée en ce que** le réservoir de résine (4) est exposé à une température ambiante inférieure à 0°C entre la mise en oeuvre de l'étape a) et de l'étape b).

10. Utilisation selon l'une quelconque des revendications précédentes, **caractérisée en ce que** le réservoir de résine (4) est stocké (206) pendant au moins deux jours entre la mise en oeuvre de l'étape a) et de l'étape b).

11. Utilisation selon l'une quelconque des revendications précédentes, **caractérisée en ce que** le réservoir de résine (4) est stocké (206) pendant au moins une semaine entre la mise en oeuvre de l'étape a) et de l'étape b).
